# EUROPEAN PATENT SPECIFICATION

(11) **EP 2 805 802 B1**
(45) Date of publication and mention of the grant of the patent: **01.02.2017**
(21) Application number: 13168504.2
(22) Date of filing: 21.05.2013
(51) Int. Cl.: B29B 11/16

(54) **System and method for producing preforms**
System und Verfahren zur Herstellung von Vorformlingen
Système et procédé de fabrication de préformes

(43) Date of publication of application: 26.11.2014
(73) Proprietor: Airbus Operations GmbH, 21129 Hamburg (DE)
(72) Inventor: Witte, Tassilo, 21680 Stade (DE); Eling, Fabian, 58708 Menden (DE); Winter, Hannes, 21682 Stade (DE)
(74) Representative: Isarpatent

(56) References cited:
- EP-A2- 2 599 604
- WO-A1-00/24563
- WO-A1-2011/039484
- WO-A2-2005/105413
- DE-A1-102004 039 751
- DE-A1-102008 051 121
- US-A- 4 151 031
- CAMPBELL F C ED - CAMPBELL FLAKE C: "Manufacturing processes for advanced composites, Chapter 10 (Thermoplastic Composites: An Unfulfilled Promise)", 1 January 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2 * page 389 - page 390; figure 27 * * *
- B. Tomas Aström: "Thermoplastic composite manufacturing" In: "Composites", 1 December 2001 (2001-12-01), ASM International, USA, XP055078683, ISBN: 978-0-87-170703-1 pages 570-578, * page 575 - page 576; figure 11 * * *
- HENNINGER F ET AL: "Production of textile reinforced thermoplastic profiles by roll forming", COMPOSITES PART A: APPLIED SCIENCE AND MANUFACTURING, ELSEVIER SCIENCE PUBLISHERS B.V., AMSTERDAM, NL, vol. 35, no. 5, 1 May 2004 (2004-05-01), pages 573-583, XP004499226, ISSN: 1359-835X, DOI: 10.1016/J.COMPOSITESA.2003.12.001

## Description

This invention relates to a system and method for producing a composite preform, and especially to a system and method for automated and continuous preforming of reinforcing material for a fibre-reinforced composite.

Current manufacturing techniques employed in the production of aircraft and aircraft components do not provide a system or method for the high-volume manufacture of fibre-reinforced composite components having variable geometry and/or variable laminate structures. As a result, the manual effort required to produce such components is significant, which naturally also leads to substantial costs. Some efforts to address this issue have been made by the present applicant as described in the documents WO 2011/039484 A1 and DE 10 2008 051121 A1.

It is therefore an object of the present invention to provide a new and improved system and method for use in production of fibre-reinforced composite components, especially preforms therefor, for the aircraft or spacecraft industry. In this regard, the system and method of the invention can desirably be fully automated and configured for continuous operation.

In accordance with the present invention, a new system for producing composite preforms having the features as recited in claim 1 and a new method of producing composite preforms comprising the steps as recited in claim 7 are provided. Preferred features of the present invention are recited in the dependent claims.

According to one aspect, therefore, the invention provides a system for producing a composite preform, and especially for continuous preforming of reinforcing material for a composite component, comprising:
a feeding device for feeding one or more layers of preform material as elongate, and preferably continuous, strips or sheets in a longitudinal direction from a material supply along a process path;
a laying device for laying or inserting a discrete or non-continuous section of preform material on or between the one or more layers fed along the process path;
a first heating device arranged in the process path for heating the one or more layers of the preform material fed along the process path to soften or activate a resin or binder in the one or more layers;
a preliminary forming station downstream of the first heating device, the preliminary forming station comprising a mould or form in or on which the cross-sectional profile of the one or more layers of preform material undergoes a preliminary shaping or moulding;
a second heating device arranged in the process path downstream of the preliminary forming station for heating the preform material fed along the process path; and
a forming device arranged in the process path downstream of the second heating device and configured to shape or mould a cross-sectional profile of the one or more layers of preform material as the one or more layers are fed along the process path;
wherein the forming device is configured to shape or mould the cross-sectional profile of the one or more layers transverse to the longitudinal direction;
wherein the forming device includes a plurality of forming stations arranged in series along the process path to progressively shape or mould the cross-sectional profile of the preform material as the one or more layers are fed along the process path; and
wherein the forming device includes a rotary frame having at least one form or mould on a circumference thereof in or on which the cross-sectional profile of the preform material is shaped or moulded.

By virtue of the fact that the feeding device may feed one or a plurality or layers of preform material from the material supply, the system of the invention can be adapted to various preform configurations. That is, the number of layers and the composition of each layer of the preform material can be selected and/or adjusted for flexibility in production of the composite preform. Furthermore, the fact that the layers of preform material are shaped or moulded as they are fed along the process path provides for a continuous production process and this, in turn, can enable high-volume manufacture.

According to the invention, the feeding device is configured to feed the one or more layers of preform material as elongate, preferably continuous, webs (such as strips or sheets) in a longitudinal direction along the process path. In this regard the material supply preferably comprises at least one spool, roll or reel of the preform material, which may then be drawn from the material supply as one or more layers of continuous web, e.g. strip or sheet. As noted briefly above, the preform material is preferably reinforcing material for a composite component, and particularly a fibre material for production of preforms for fibre-reinforced composite components. In particular, the fibre material may comprise a fibre array or a fabric, such as a woven or non-woven fabric, of any one or more of various different types of reinforcing fibres, including but not limited to glass fibres, carbon fibres, aramid fibres, or the like. The fibres are preferably dry but may include resin or polymer coatings to assist bonding and shaping in production of the preform. Also, the preform material may include one or more layers of material, which may e.g. act as a resin or binder layer, and/or one or more wire mesh layer, e.g. for providing lightning protection in an aircraft application. The resin or binder is preferably a polymer, such as a thermoplastic or thermosetting polymer; examples include epoxy, polyester, vinyl ester, or the like. The one or more layers of preform material are preferably a plurality of layers of continuous web, such as strip or sheet material, which are drawn from a corresponding plurality of spools, rolls or reels. The individual layers of preform material may be essentially the same or may differ from one another depending on specific requirements for the preform.

In a preferred embodiment, the feeding device comprises at least one pair of driven rollers for pulling the one or more layers of preform material from the material supply and feeding or conveying the layer(s) along the process path. Thus, the driven rollers may draw a continuous web from each of the spools, rolls or reels of the material supply, and the webs are then conveyed along the process path superposed with one another as layers of the preform material. In this way, the same drive rollers may draw all of the layers of preform material together to form a compound web which is then fed or conveyed along the process path.

In a preferred embodiment, the first heating device includes at least one heater, and preferably a plurality of heaters, for heating the one or more layers of the preform material fed along the process path substantially uniformly. The at least one heater may include any of a number of heat sources, such as hot air, induction, or infrared heating. The heating device activates and softens the resin or binder provided in the one or more layers to facilitate the subsequent shaping or moulding of the preform as well as bonding or fixing the preform material layers to one another.

According to the invention, the system further comprises a laying device for laying or inserting a discrete or non-continuous section of preform material on or between the one or more layers fed along the process path. The laying device may therefore be used to add discrete and localised sections or portions of reinforcing preform material at specific critical positions, depending on the preform requirements. To this end, the laying device may comprises a transport head for picking-up, transporting, and laying or inserting the discrete or non-continuous section on or between the one or more layers. Desirably, therefore, the system also includes a consolidating device for consolidating or compressing or pressing together the one or more layers of preform material and/or a discrete or non-continuous section laid or inserted therein as they are fed along the process path. For this purpose, the consolidating device may include rollers, between which the layers and/or discrete sections of preform material are consolidated or compressed.

According to the invention, the forming device is configured to shape or mould the cross-sectional profile of the preform material in a plane transverse to the direction of travel along the process path; i.e. transverse to the longitudinal direction of the web. Thus, in this embodiment, the composite preform produced may be elongate with a generally constant cross-sectional profile, as typical of structural components like ribs or stringers employed in a fuselage or airframe of an aircraft or spacecraft.

According to the invention, the forming device includes a plurality of forming stations arranged in series along the process path to progressively shape or mould the cross-sectional profile of the preform material as the one or more layers are fed along the process path. By carrying out the shaping or moulding procedure at a series of stations or over a series of steps, the shaping or moulding is performed progressively, and the procedure has flexibility to be varied by adapting one or more of those stations. Furthermore, the forming device includes a rotary frame having at least one form or mould on a circumference thereof, in or on which the cross-sectional profile of the preform material is shaped or moulded. The circumference of the rotary frame may thus be arranged on the process path, with the rotary frame configured to rotate at a speed for which a tangential speed of the form or mould on the circumference of the rotary frame is substantially the same as the speed at which the one or more layers of preform material are fed along the process path by the feeding device. In this embodiment, therefore, the plurality of forming stations may be arranged in series on or around the circumference of the rotary frame. The rotary frame preferably comprises a plurality of forms or moulds arranged on or around the circumference thereof, and the plurality of forms or moulds may be separately detachable from the rotary frame. Accordingly, once a composite preform is finalised or completed in one of the forms or moulds, the preform material of that item may be severed or cut from the continuous web and the preform removed from the rotary frame within the form or mould; i.e. the form or mould itself can be removed or detached from the frame with a finished preform in it. That form or mould can then be placed in an infusion station, at which wet resin is then injected into a cavity of the mould and the preform held therein to produce a composite component. The resin is typically pressurized and forced into the preform under vacuum in a Resin Transfer Molding (RTM) process. Alternatively, the resin may be entirely pulled into the cavity under vacuum in a Vacuum Assisted Resin Transfer Molding (VARTM) process. The moulding processes allow precise tolerances and detailed shaping of the component but must be performed carefully to avoid weak spots in a final component resulting from the fabric of the preform not being saturated fully by the wet resin.

According to the invention, the system further comprises a preliminary forming station downstream of the first heating device, the preliminary forming station comprising a mould or form in or upon which the cross-sectional profile of the one or more layers of preform material undergoes a preliminary shaping or moulding before the one or more layers reach the forming device. Thus, according to the invention, the system includes a second heating device arranged in the process path downstream of a preliminary forming station for heating the preform material fed along the process path before the one or more layers reach the forming device. In this way, the preform material can be heated again before the primary forming operation takes place.

According to another aspect, the invention provides a method of producing a composite preform with a system according to the invention, and especially a method of continuously preforming reinforcing material for a composite component, comprising the steps:
feeding one or more layers of preform material from a material supply along a process path;
heating the one or more layers of the preform material fed along the process path to activate a resin or binder in the one or more layers; and
forming or shaping a cross-sectional profile of the one or more layers of preform material as the one or more layers are fed along the process path.

The feeding step may comprise feeding each layer of preform material as an elongate, and preferably continuous, web (such as a strip or sheet) in a longitudinal direction along the process path, whereby the forming step comprises shaping or moulding the cross-sectional profile of the one or more layers of preform material considered in a plane transverse to the longitudinal direction.

The forming step may include a plurality of discrete forming operations carried out in series along the process path to progressively shape or mould the cross-sectional profile of the preform material as the one or more layers are fed along the process path. In this regard, the forming step may include shaping or moulding the cross-sectional profile of the preform material around or on a circumference of a rotary frame. Thus, the rotary frame preferably rotates with a tangential speed at a circumference thereof substantially equal to a speed at which the one or more layers of preform material is/are fed in the feeding step. The rotary frame may comprise a plurality of forms or moulds arranged around the circumference thereof, and each of the plurality of forms or moulds may be separately detachable from the rotary frame.

The material supply may include at least one spool, roll or reel of preform material and the feeding step comprises drawing the one or more layers of preform material from the material supply and feeding or conveying them along the process path by driving at least one pair of rollers. That is, the one or more layers of preform material are drawn between the driven rollers and fed along the process path.

The method may further comprise the step of laying or inserting a discrete or non-continuous section of preform material on or between the one or more layers of preform material fed along the process path. The method preferably also includes the step of consolidating or pressing together the one or more layers of preform material and/or the discrete or non-continuous section of preform material fed along the process path, for example via rollers.

The method may comprise a preliminary forming step in which the cross-sectional profile of the one or more layers of preform material undergoes a preliminary shaping or moulding before the one or more layers reach the forming device. In this preliminary forming step, the cross-sectional profile of the one or more layers of the preform material is desirably shaped or moulded in a plane transverse to the travel direction or the longitudinal direction.

The system and method of the present invention thus allow the manual effort previously required in the production of fibre-reinforced composite components that have a variable geometry and/or variable laminate structures to be markedly reduced by new production techniques that can operate continuously and largely or fully automated. This, in turn, can substantially reduce the production costs, enable high-volume manufacture, and also increase quality and repeatability of the composite preform and component production. As will be apparent from the description of the preferred embodiments, both the system and method of this invention particularly lends themselves to the production of composite preforms for elongate structural components having a specific cross-section or profile.

The present invention may provide a fibre-reinforced composite component, especially for an aircraft or spacecraft, which includes a composite preform produced with a system or method according to any one of the embodiments of the invention described above. In this regard, the composite preform may have been moulded in an RTM or a VARTM process to produce the composite component.

The invention may provide an aircraft or spacecraft that incorporates one or more such fibre-reinforced composite component.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic side view of a system for producing preforms according to a preferred embodiment of the invention at a stage of production;
- Fig. 2: is a schematic side view of the system of Fig. 1 at a later stage of production;
- Fig. 3: is a detailed perspective view of a heating unit in the system of Figs. 1 and 2;
- Fig. 4: is a schematic cross-sectional view of the forming of a preform profile at an initial forming stage;
- Fig. 5: is a schematic cross-sectional view of the forming of a preform profile at a later forming stage;
- Fig. 6: is a schematic perspective view of preform profiles before and after a bending operation;
- Fig. 7: is a schematic cross-sectional view of the forming of a preform profile at a later forming stage;
- Fig. 8: illustrates the geometry of a rotary forming device of the system for producing preforms according to a preferred embodiment;
- Fig. 9: is a schematic side view of a rotary forming device of the system for producing preforms according to a preferred embodiment;
- Fig. 10: is a cross-sectional side view detail of the fibre-reinforced composite material entering the rotary forming device of the system and traversing forming roller stations nos. 1 to 6;
- Fig. 11: shows perspective views of forming roller stations nos. 1 to 5 from the detail view of Fig. 10;
- Fig. 12: is a cross-sectional view illustrating the forming of the preform profile at forming roller station no. 6 of Fig. 10;
- Fig. 13: is a perspective view of the forming of the preform profile in a first part of roller station no. 6;
- Fig. 14: is a cross-sectional view illustrating the forming of the preform profile in a second part of roller station no. 6 of Fig. 10;
- Fig. 15: is a cross-sectional view illustrating the forming of the preform profile in a third part of roller station no. 6 of Fig. 10;
- Fig. 16: is a cross-sectional view illustrating the forming of the preform profile in a fourth part of roller station no. 6 of Fig. 10;
- Fig. 17: is a diagram that illustrates steps of a method of producing a preform according to an embodiment of the invention; and
- Fig. 18: is a schematic front view of an aircraft including one or more structural component based on a preform produced by the system or method of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as it accorded to such terms and expressions with respect to their corresponding respective areas of inquiry and study, except where specific meanings have otherwise been set forth herein.

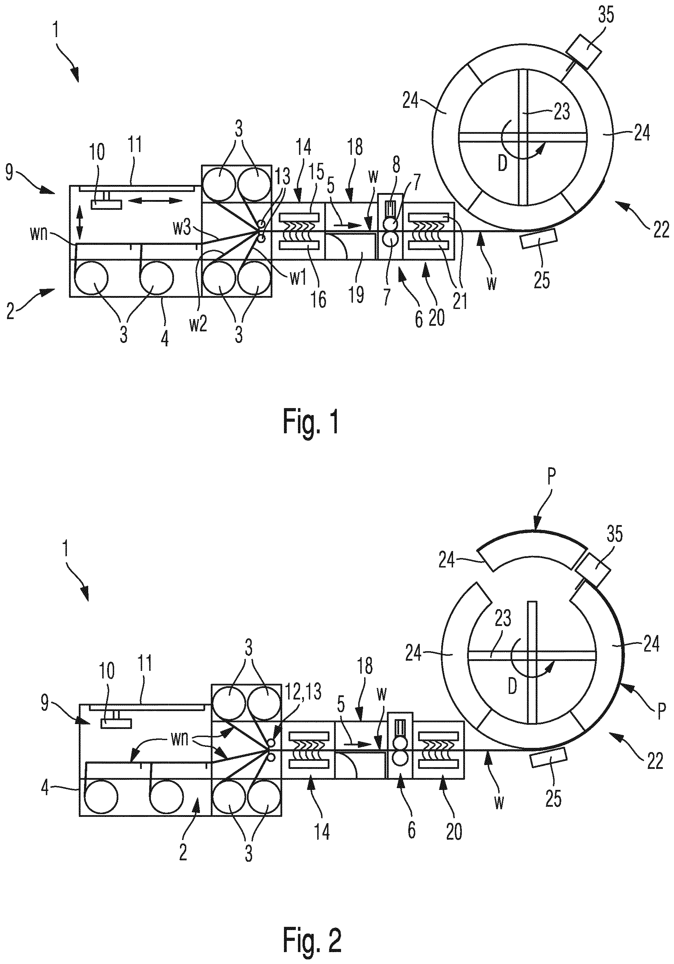

With reference to Figs. 1 and 2 of the drawings, a system 1 for producing a composite preform P according to a preferred embodiment of the invention is shown in two different stages of preform production. The system 1 of this embodiment is designed for continuously preforming reinforcing material for use in fabrication of fibre-reinforced composite components (not shown). The system 1 includes a supply 2 of the preform material, which is provided in the form of continuous webs wn of woven or non-woven fabric on rolls or reels 3, which are rotatably mounted on a support frame 4 of the system 1. That is, the webs w1, w2, w3, etc. are continuous sheets or strips of material which are drawn from respective individual rolls or reels 3 in the material supply 2 and consolidated into a compound web w. In other words, the compound web w comprises a plurality of layers of preform material superposed upon one another and conveyed along a process path 5 of the system 1. To this end, the system 1 includes a feeding device 6 having at least one pair of rollers 7 driven by an electric motor 8. The rollers 7 engage the compound web w of multiple layers of preform material at upper and lower sides thereof and act to both draw these layers w1, w2, w3, etc. from their respective rolls or reels 3 in the material supply 2 and also feed or convey these layers in the compound web w along the process path 5 through the system 1. The separate webs or layers wn of the preform material may include one or more types of reinforcing fibres, but carbon fibres are preferred. The fibres may be "dry" or may include resin or polymer coatings to assist bonding and shaping in production of the preform. The webs wn of preform material may also include one or more film or resin or binder layer, and optionally also a wire mesh layer for lightning protection in aircraft application.

In addition to the plurality of continuous superimposed webs w1, w2, w3, etc. of reinforcing fabric from the respective rolls or reels 3 in the material supply 2, the compound web w of preform material may also include non-continuous sections of material. In this regard, the system 1 of this embodiment further includes a laying device 9 having a transport head 10 that is movable in at least two and preferably three or more degrees-of-freedom for picking-up, transporting, and laying or placing discrete or non-continuous additional sections of reinforcing material on or between the continuous webs wn of preform material drawn from the individual rolls or reels 3. To this end, the transport head 10 may be movably mounted on rails 11 and drivable, e.g. via servo motors (not shown), for movement in the directions of arrows A, B to introduce or lay the discrete or non-continuous sections of preform material onto the process path 5.

The driven rollers 7 of the feeding device 6 pull or draw the layers of preform material through a consolidating device 12, and more particularly between rollers 13 of the consolidating device 12. As the rollers 13 are resiliently or spring biased towards one another, they act to consolidate or compress both the continuous and non-continuous portions of the preform material into the compact compound web w, which then passes into a first heating device 14 arranged on the process path 5 of the system 1.

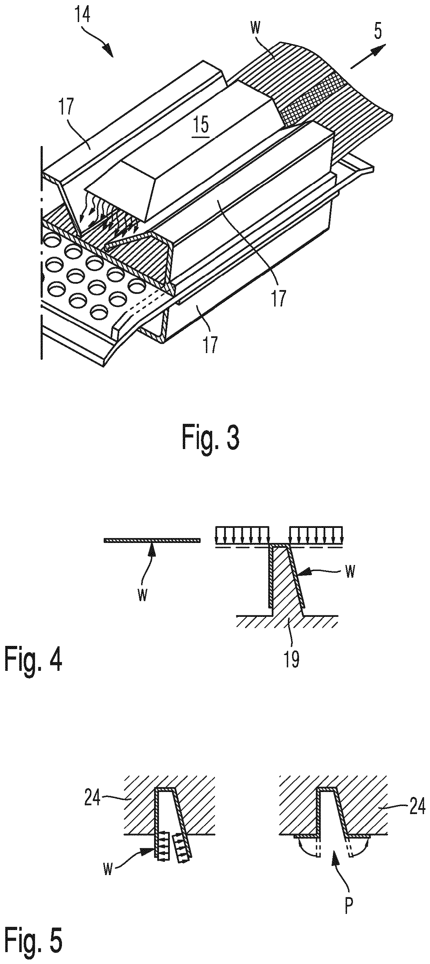

Referring to Fig. 1 in conjunction with Fig. 3 of the drawings, it will be seen that the first heating device 14 comprises upper and lower heating units 15, 16 for heating the compound web w of preform material from upper and lower sides, respectively, in order to rapidly transmit heat to the middle of the web w. In this embodiment, the heating units 15, 16 are infrared (IR) heaters, of which in Fig. 3 only the upper heating unit 15 is denoted. In one particular example, the two heating units operate at a constant 190°C and from a starting temperature of the web at approx. 25°C, the temperature of the middle layers rises to about 100°C after a heating period of between about 30 s and 120 s, preferably between about 40 s and 90 s. As can be seen in Fig. 3 of the drawings, the heating device may incorporate one or more shield members 17 for shielding a part of the preform material web w from heat transmitted by the heating unit 15. In Fig. 3, for example, two shield members 17 are provided to confine the main heating effect to a central region or strip of the compound w.

With reference now to Fig. 4 of the drawings, a preliminary forming procedure for the compound web w of preform material is shown schematically. In Figs. 1 and 2 of the drawings, for example, this procedure could take place in a preliminary forming station 18 directly downstream of the first heating device 14. In this regard, the preliminary forming station 18 may comprise a mould or form 19 upon or over which the cross-sectional profile of the compound web w of preform material undergoes an initial shaping or moulding procedure. As shown in Fig. 4, for example, the substantially flat or planar web w comprising multiple layers preform material may be pressed or folded over an up-standing form 19 to generate an inverted V- or U-shape. Instead of the preliminary forming in Fig. 4, however, the system 1 of the embodiment shown in Fig. 1 and 2 may provide a much smaller or more limited indentation in the central region of the preform material web w. Downstream of the feeding device 6, a second heating device 20 is provided for re-heating the compound web w of preform material before that material enters a main or primary forming device 22 of the system 1. In this way, the second heating device 20 again warms and softens the resin or binder material in the web w to render the layers of preform material flexible and readily deformable in the forming device 22.

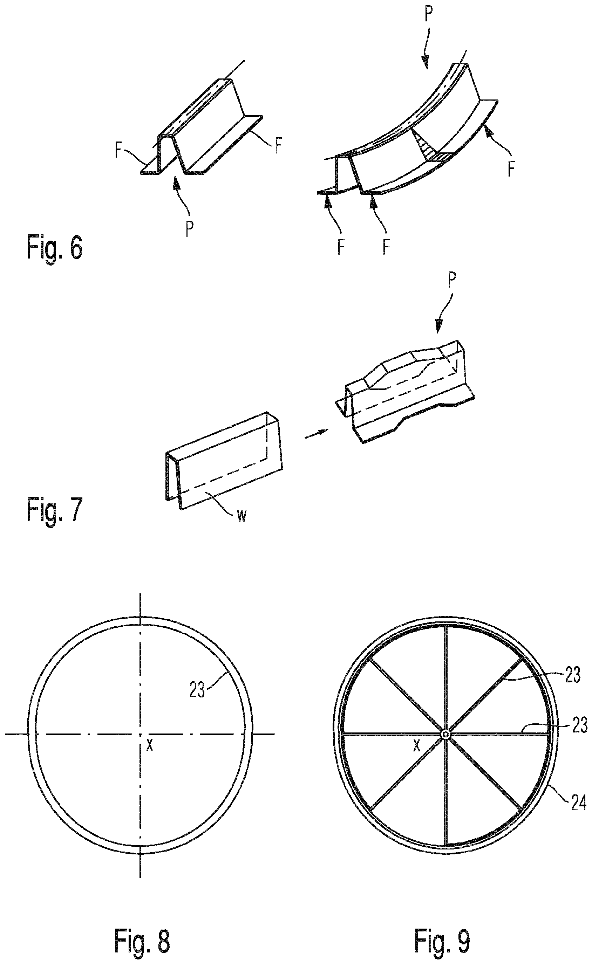

The configuration and operation of the main forming device 22 of system 1 will be described with reference to Figs. 1 and 2 as well as to Figs. 5 to 16 of the drawings. The forming device 22 is designed for continuously preforming the web w of composite reinforcing material and, for this purpose, has a rotary frame 23 with a plurality of moulds or forms 24 on or around a circumference of that rotary frame 23. In this particular embodiment, the system 1 is specifically concerned with forming a composite preform P having a cap or omega (Ω) profile, i.e. basically a channel section with an inverted V-or U-shape having flange-type footings F extending along its length on opposite sides of the channel, as seen in Fig. 6. Such profiles or cross-sections are typical for structural components, such as ribs or stringers, employed in fuselage or airframe structures of aircraft and spacecraft. Fig. 7 of the drawings simply demonstrates the desired capabilities of the system 1 for locally modifying a basic inverted V- or U-shape from Fig. 4 into a preform profile having a complex and variable cross-section.

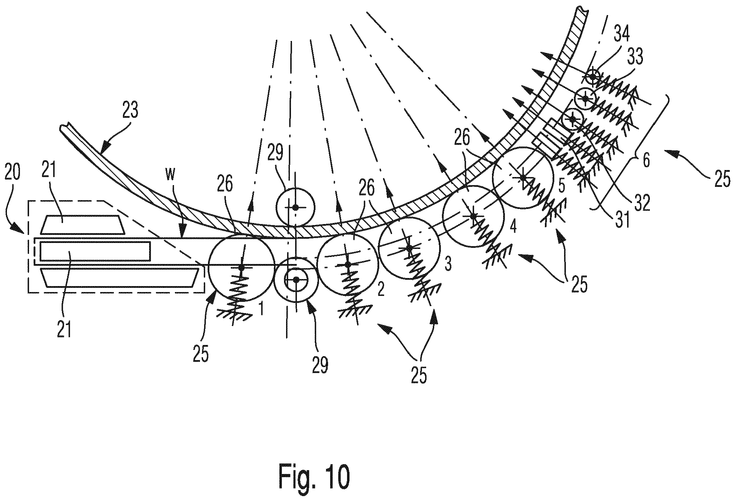

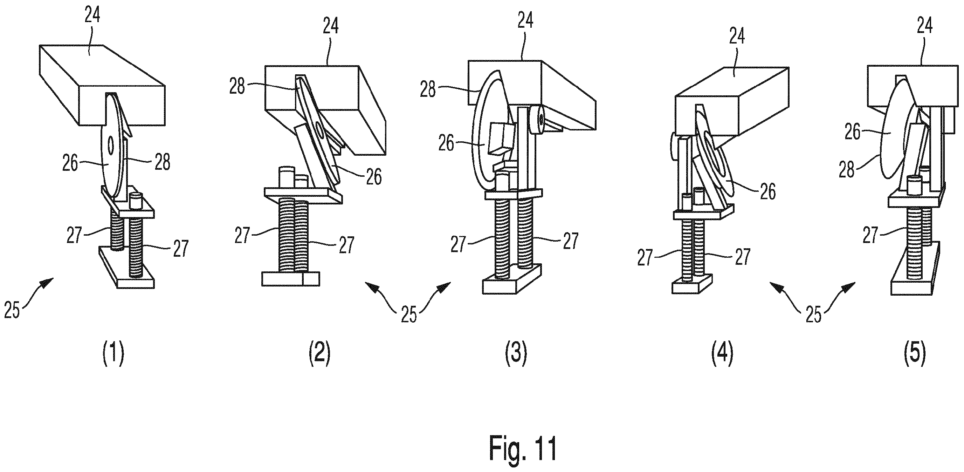

With reference now to Fig. 10 of the drawings, a partial view of the system 1 shows the layers of preform material in the compound web w emerging between upper and lower heating units 21 of the second heating device 20 and entering a series of forming stations 25 arranged at a circumference of the rotary frame 23. The forming stations 25 in the series are numbered consecutively (nos. 1 to 6) in Fig. 10 and each of these individual forming stations 25 and its operation is described in more detail with reference to Figs. 11 to 16.

Fig. 11 of the drawings shows each of the first five forming stations 25 (i.e. nos. 1 to 5) shown schematically in Fig. 10 in a single perspective view. Each of the forming stations 25 is fixed on the support frame 4 such that the rotary frame 23 rotates about its axis X relative to the stations 25. Also, each of these five forming stations 25 includes a wheel or roller 26 that is resiliently mounted to be biased via one or more springs 27 so that an edge 28 of the wheel 26 is pressed into a channel-like cavity of the mould or form 24 arranged on the circumference of the rotary frame 23. The springs 27 bias the wheels in the radially inward direction towards the rotary axis X. These wheels 26 of the forming stations 25 are not directly driven. Rather, the rotary frame 23 is itself driven via drive rollers 29, which rotate the frame 23 and the moulds or forms 24 on its circumference about the rotary axis X. The forming wheels or rollers 26 at each forming station 25 therefore counter-rotate due to their contact with the moving web w and circumferential moulds 24 on the rotary frame. In this regard, a tangential speed of the rotary frame 23, and thus of the moulds 24, is substantially the same as a linear speed of the compound web w of preform material as it is being fed by the feeding device 6 along the process path 5 of the system 1. The rotary frame 23 therefore continues to convey and draw the layers of preform material in the web w at substantially the same speed.

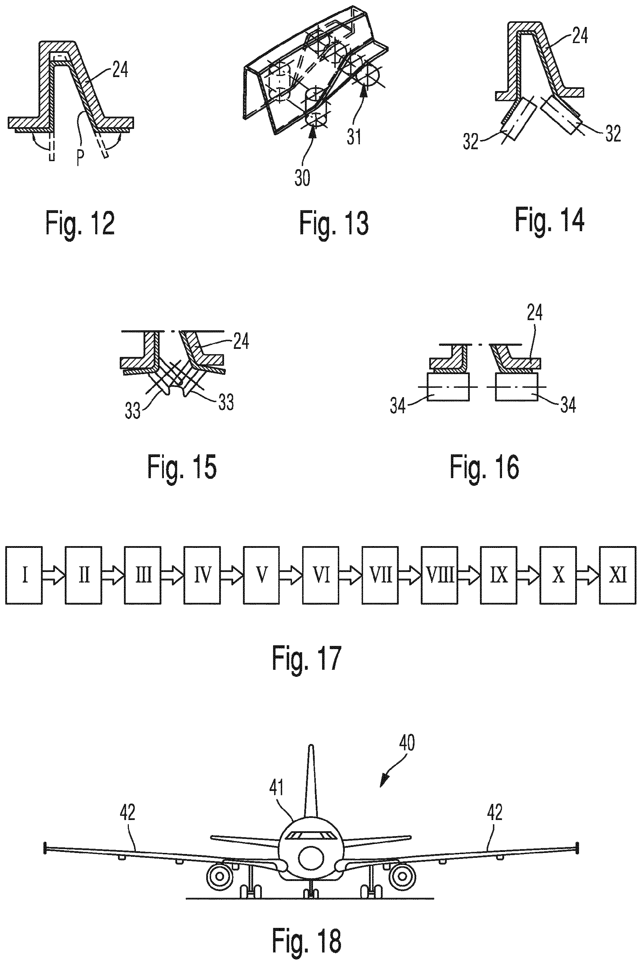

Referring now to Figs. 12 to 16 of the drawings, details are illustrated of a final shaping and moulding of the preform P as the compound web w passes through the last forming station no. 6 of Fig. 10. Fig. 12 illustrates a cross-section of the mould 24 and a desired cross-sectional profile of the preform P to be produced. Fig. 13 illustrates the rollers 30, 31 at an initial part of final forming station 25 (no. 6), which begin to impart flange-like footings F to the cross-sectional profile of the preform P. Figs. 14 to 16 respectively show the rollers 32, 33, 34, with which the flanges or footings of the preform profile are further formed and completed.

With reference again to drawing Fig. 2, it will be seen that the system 1 includes a cutting device 35 for severing the preformed compound web w after the shaping or moulding of the web material in a respective mould 24 on the rotary frame 23 has been completed. The cutting device 35 includes a blade 36 for cutting the newly produced preform P, which is still held in its respective mould 24, across an end of that mould 24. As can be seen in Fig. 2, the entire mould 24 with preform P can then be separated or demounted from the rotary frame 23 and transported to an infusion station (not shown), at which wet resin is then injected into a cavity of the mould and the preform P held therein to produce an omega (Ω) profile fibre-reinforced composite stringer or rib component. The resin is typically pressurized and forced into the preform P under vacuum in a Resin Transfer Molding (RTM) process or may be pulled into the cavity under vacuum in a Vacuum Assisted Resin Transfer Molding (VARTM) or Resin Infusion (RI) process. In the interim, a new mould 24 can be placed on the rotary frame 23 of the forming device 22 in the system 1 and a further preform P produced.

Having described the system 1 of the invention, reference is now made to drawing Fig. 17 which shows a block diagram that schematically illustrates a method essentially corresponding to the system 1 described above. The boxes of the diagram are numbered I to XI to denote discrete or individual steps of the method according to this embodiment. In this regard, the first box I of Fig. 17 represents the step of supplying one or more layers or webs wn of reinforcing material, preferably continuous webs or layers on reels or spools 3, for producing a composite preform P. The second box II represents the step of feeding these layers or webs wn of material supplied in an overlapping or superposed arrangement along a process path 5, e.g. via a feeding device which may, for example, comprise driven rollers 7 between which the layers of material wn are drawn from respective reels or spools 3. The third box III represents the step of applying a patch (i.e. discrete, non-continuous additional section or layer) of material to the one or more layers or webs wn already present via a laying device 9, i.e. laying or inserting a discrete or non-continuous section of preform material on or between the one or more layers wn fed along the process path. The fourth box IV then represents the step of consolidating or pressing together the multiple layers of material by compressing the superposed layers between a pair of rollers to provide a consolidated compound web w of the layered preform material, that is fed along the process path 5.

The fifth box V in the diagram of Fig. 17 represents the step of heating the compound web w via a first heating device 14 to activate a resin or binder material provided in the layers of the compound web w before shaping or moulding the preform material. The sixth box VI represents a preliminary forming step in which initial shaping or moulding of the compound web w takes place as the web travels along the process path 5, by subjecting the cross-sectional profile of the one or more layers wn of preform material to a preliminary shaping or moulding before the one or more layers wn reach a primary or main forming stage The seventh box VII of the diagram then represents a second heating step in which further heating (or re-heating) of the compound web w takes place, preferably again from both upper and lower sides of the web to soften and activate a binder or resin material in the compound web prior to a main or primary forming stage in the production of the composite preform P. The eighth box VIII of the diagram represents a first forming step corresponding to one or more forming station 25 in which a wheel member 36 presses and shapes the deformable compound web w of preform material into a female mould such that the web progressively assumes the form of the mould 24. The ninth box IX of the diagram represents a forming step corresponding to the processes at the forming station no. 6 at which both cross-sectional and longitudinal forming of the web material is finalized in the mould on a periphery or circumference of the rotary frame 23 of the forming device 22. The tenth box X of Fig. 17 represents the step of cutting a completed preform from the continuous web w at an edge of a respective mould 24 to separate and isolate that completed preform P. The final box XI of the diagram represents the step of now removing the respective moulding tool 24 from the rotary frame 23 in order to transport the preform to an infusion station for infusion with wet resin to fabricate a composite component with the preform produced according to the present invention.

The feeding step of second box II may comprise feeding the one or more layers wn of preform material as elongate, and preferably continuous, strips or sheets in a longitudinal direction along the process path 5, wherein the forming step comprises shaping or moulding the cross-sectional profile of the one or more layers wn transverse to the longitudinal direction.

In that case, the forming step of the ninth box IX may include a plurality of discrete forming operations in series along the process path 5 to progressively shape or mould the cross-sectional profile of the preform material as the one or more layers wn are fed along the process path 5. This may be done by shaping or moulding the cross-sectional profile of the preform material on a circumference of a rotary frame 23. Optionally, the rotary frame 23 may rotate with a tangential speed at a circumference thereof substantially equal to a speed at which the one or more layers wn of preform material is fed in the feeding step.

The rotary frame 23 may for this purpose include a plurality of forms or moulds 24 arranged around the circumference thereof, wherein the plurality of forms or moulds 24 are separately detachable from the rotary frame 23.

When the material supply 2 comprises at least one spool or reel 3 of preform material, the feeding step may comprise drawing the one or more layers wn of preform material from the material supply 2 and feeding or conveying the one or more layers wn along the process path 5 by driving at least one pair of rollers 7.

As noted above, the preforms P produced with the system 1 and method of the invention are further processed into structural components, such as stringers and/or ribs, e.g. for use in the aeronautical and automotive industries. As an example, Fig. 18 of the drawings shows an aircraft 40 with a fuselage or airframe structure 41 and wings 42 that may incorporate such composite components, like stringers and/or ribs. Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: system
- 2: material supply
- 3: roll or reel
- 4: support frame
- 5: process path
- 6: feeding device
- 7: driven roller
- 8: electric motor
- 9: laying device
- 10: transport head
- 11: rails
- 12: consolidating device
- 13: roller
- 14: first heating device
- 15: upper heating unit
- 16: lower heating unit
- 17: shield member
- 18: preliminary forming station
- 19: upstanding form
- 20: second heating device
- 21: upper/lower heating unit
- 22: forming device
- 23: rotary frame
- 24: mould or form
- 25: forming station
- 26: wheel member
- 27: spring
- 28: edge of wheel member
- 29: drive roller
- 30: roller of forming station no. 6
- 31: roller of forming station no. 6
- 32: roller of forming station no. 6
- 33: roller of forming station no. 6
- 34: roller of forming station no. 6
- 35: cutting device
- 36: cutting blade
- 40: aircraft
- 41: fuselage or airframe
- 42: wing
- P: preform
- wn: an individual web or material layer
- w1: first web or first material layer
- w2: second web or second material layer
- w3: third web or third material layer
- w: compound web
- A: movement direction
- B: movement direction
- S: central plane of compound web
- F: flange of preform profile
- D: rotational direction
- X: rotary axis of rotary frame

## Claims

1. A system (1) for producing a composite preform (P), and especially for continuous preforming of reinforcing material for a composite component, comprising:
a feeding device (6) for feeding one or more layers (wn) of preform material as elongate, and preferably continuous, strips or sheets in a longitudinal direction from a material supply (2) along a process path (5);
a laying device (9) for laying or inserting a discrete or non-continuous section of preform material on or between the one or more layers (wn) fed along the process path (5);
a first heating device (14) arranged in the process path (5) for heating the one or more layers (wn) of the preform material fed along the process path (5) to soften or activate a resin or binder in the one or more layers (wn);
a preliminary forming station (18) downstream of the first heating device (14), the preliminary forming station (18) comprising a mould or form (19) in or on which the cross-sectional profile of the one or more layers (wn) of preform material undergoes a preliminary shaping or moulding;
a second heating device (20) arranged in the process path (5) downstream of the preliminary forming station (18) for heating the preform material fed along the process path (5); and
a forming device (22) arranged in the process path (5) downstream of the second heating device (20) and configured to shape or mould a cross-sectional profile of the one or more layers (wn) of preform material as the one or more layers (wn) are fed along the process path (5);
wherein the forming device (22) is configured to shape or mould the cross-sectional profile of the one or more layers (wn) transverse to the longitudinal direction;
wherein the forming device (22) includes a plurality of forming stations (25) arranged in series along the process path (5) to progressively shape or mould the cross-sectional profile of the preform material as the one or more layers (wn) are fed along the process path (5); and
wherein the forming device (22) includes a rotary frame (23) having at least one form or mould (24) on a circumference thereof in or on which the cross-sectional profile of the preform material is shaped or moulded.

2. A system (1) according to claim 1, wherein the rotary frame (23) is configured to rotate at a speed for which the tangential speed of the form or mould (24) on the circumference thereof is substantially the same as a speed of the one or more layers (wn) of preform material fed by the feeding device (6).

3. A system (1) according to claim 1 or claim 2, wherein the rotary frame (23) comprises a plurality of forms or moulds (24) arranged around the circumference thereof, and wherein the plurality of forms or moulds (24) are separately detachable from the rotary frame (23).

4. A system (1) according to any of claims 1 to 3, wherein the material supply (2) comprises at least one spool or reel (3) of the fiber material; and/or wherein the feeding device (6) comprises at least one pair of driven rollers (7) for drawing the one or more layers (wn) of preform material from the material supply (2) and feeding or conveying them along the process path (5).

5. A system (1) according to any of the claims 1 to 4, wherein the laying device (9) comprises a transport head (10) for picking-up, transporting, and laying or inserting the discrete or non-continuous section on or between the one or more layers (wn).

6. A system (1) according to any of claims 1 to 5, further comprising a consolidating device (12) for consolidating or pressing together the one or more layers (wn) of preform material fed along the process path (5).

7. A method of producing a composite preform with a system according to any of the claims 1 to 6, especially of continuously preforming a reinforcing material for a composite component, comprising the steps:
feeding one or more layers (wn) of preform material from a material supply (2) along a process path (5);
heating the one or more layers (wn) of the preform material fed along the process path (5) to activate or soften a resin or binder in the one or more layers; and
forming or shaping a cross-sectional profile of the one or more layers of preform material as the one or more layers (wn) are fed along the process path (5).

## Patentansprüche

1. System (1) zum Herstellen eines Verbundvorformlings (P) und insbesondere zum kontinuierlichen Vorformen von Verstärkungsmaterial für eine Verbundkomponente, das Folgendes umfasst:
eine Zuführvorrichtung (6) zum Zuführen einer oder mehrerer Schichten (wn) von Vorformmaterial als längliche und bevorzugt kontinuierliche Streifen oder Bahnen in einer Längsrichtung von einer Materialzufuhr (2) her entlang eines Prozesspfades (5);
eine Legevorrichtung (9) zum Legen oder Einsetzen einer diskreten oder nicht-kontinuierlichen Sektion von Vorformmaterial auf oder zwischen die eine oder die mehreren Schichten (wn), die entlang des Prozesspfades (5) zugeführt werden;
eine erste Erwärmungsvorrichtung (14), die in dem Prozesspfad (5) angeordnet ist, zum Erwärmen der einen oder der mehreren Schichten (wn) des Vorformmaterials, das entlang des Prozesspfades (5) zugeführt wird, zum Erweichen oder Aktivieren eines Harzes oder Bindemittels in der einen oder den mehreren Schichten (wn);
eine vorläufige Formungsstation (18) stromabwärts der ersten Erwärmungsvorrichtung (14), wobei die vorläufige Formungsstation (18) ein Formwerkzeug oder eine Form (19) umfasst, worin oder worauf das Querschnittsprofil der einen oder der mehreren Schichten (wn) von Vorformmaterial einer vorläufigen Formung oder Formgebung unterzogen wird;
eine zweite Erwärmungsvorrichtung (20), die in dem Prozesspfad (5) stromabwärts der vorläufigen Formungsstation (18) angeordnet ist, zum Erwärmen des Vorformmaterials, das entlang des Prozesspfades (5) zugeführt wird; und
eine Formungsvorrichtung (22), die in dem Prozesspfad (5) stromabwärts der zweiten Erwärmungsvorrichtung (20) angeordnet ist und dafür ausgebildet ist, ein Querschnittsprofil der einen oder der mehreren Schichten (wn) von Vorformmaterial zu formen oder zu bilden, während die eine oder die mehreren Schichten (wn) entlang des Prozesspfades (5) zugeführt werden;
wobei die Formungsvorrichtung (22) dafür ausgebildet ist, das Querschnittsprofil der einen oder der mehreren Schichten (wn) quer zu der Längsrichtung zu formen oder zu bilden;
wobei die Formungsvorrichtung (22) mehrere Formungsstationen (25) umfasst, die in Reihe entlang des Prozesspfades (5) angeordnet sind, um das Querschnittsprofil des Vorformmaterials allmählich zu formen oder zu bilden, während die eine oder die mehreren Schichten (wn) entlang des Prozesspfades (5) zugeführt werden; und
wobei die Formungsvorrichtung (22) einen Drehrahmen (23) umfasst, der mindestens eine Form oder ein Formwerkzeug (24) an seinen Umfang hat, worin oder worauf das Querschnittsprofil des Vorformmaterials geformt oder gebildet wird.

2. System (1) nach Anspruch 1, wobei der Drehrahmen (23) dafür ausgebildet ist, sich mit einer Geschwindigkeit zu drehen, bei der die Tangentialgeschwindigkeit der Form oder des Formwerkzeugs (24) an seinem Umfang im Wesentlichen die gleiche ist wie eine Geschwindigkeit der einen oder der mehreren Schichten (wn) von Vorformmaterial, das durch den Zuführvorrichtung (6) zugeführt wird.

3. System (1) nach Anspruch 1 oder Anspruch 2, wobei der Drehrahmen (23) mehrere Formen oder Formwerkzeuge (24) umfasst, die entlang seines Umfangs angeordnet sind, und wobei die mehreren Formen oder Formwerkzeuge (24) separat von dem Drehrahmen (23) abgenommen werden können.

4. System (1) nach einem der Ansprüche 1 bis 3, wobei die Materialzufuhr (2) mindestens eine Spule oder Rolle (3) des Fasermaterial umfasst; und/oder wobei die Zuführvorrichtung (6) mindestens ein Paar angetriebener Rollen (7) zum Ziehen der einen oder der mehreren Schichten (wn) von Vorformmaterial von der Materialzufuhr (2) und zum Zuführen oder Transportieren der einen oder der mehreren Schichten (wn) entlang des Prozesspfades (5) umfasst.

5. System (1) nach einem der Ansprüche 1 bis 4, wobei die Legevorrichtung (9) einen Transportkopf (10) zum Aufnehmen, Transportieren und Legen oder Einsetzen der diskreten oder nicht-kontinuierlichen Sektion auf oder zwischen die eine oder die mehreren Schichten (wn) umfasst.

6. System (1) nach einem der Ansprüche 1 bis 5, das des Weiteren eine Konsolidierungsvorrichtung (12) zum Konsolidieren oder Zusammenpressen der einen oder der mehreren Schichten (wn) von Vorformmaterial, das entlang des Prozesspfades (5) zugeführt wird, umfasst.

7. Verfahren zum Herstellen eines Verbundvorformlings mit einem System nach einem der Ansprüche 1 bis 6, insbesondere zum kontinuierlichen Vorformen eines Verstärkungsmaterials für eine Verbundkomponente, das folgende Schritte umfasst:
Zuführen einer oder mehrerer Schichten (wn) von Vorformmaterial von einer Materialzufuhr (2) entlang eines Prozesspfades (5);
Erwärmen der einen oder der mehreren Schichten (wn) des Vorformmaterials, das entlang des Prozesspfades (5) zugeführt wird, zum Aktivieren oder Erweichen eines Harzes oder Bindemittels in der einen oder den mehreren Schichten; und
Ausbilden oder Formen eines Querschnittsprofils der einen oder der mehreren Schichten von Vorformmaterial, während die eine oder die mehreren Schichten (wn) entlang des Prozesspfades (5) zugeführt werden.

## Revendications

1. Système (1) destiné à produire une préforme composite (P), et en particulier à préformer en continu un matériau de renfort pour un élément composite, comprenant :
un moyen d'alimentation (6) destiné à alimenter une ou plusieurs couches (wn) de matériau de préforme sous forme de bandes ou feuilles allongées, et de préférence continues, dans une direction longitudinale depuis un approvisionnement en matériau (2) le long d'un chemin de traitement (5) ;
un moyen de dépose (9) destiné à déposer ou insérer une section discrète ou non-continue de matériau de préforme sur ou entre la ou les plusieurs couches (wn) alimentées le long du chemin de traitement (5) ;
un premier moyen de chauffage (14) agencé dans le chemin de traitement (5) pour chauffer la ou les plusieurs couches (wn) du matériau de préforme alimenté le long du chemin de traitement (5) pour ramollir ou activer une résine ou un liant dans la ou les plusieurs couches (wn) ;
une station de formage préliminaire (18) en aval du premier moyen de chauffage (14), la station de formage préliminaire (18) comprenant un moule ou moyen de façonnage (19) dans ou sur lequel le profilé en coupe transversal de la ou des plusieurs couches (wn) de matériau de préforme subit un façonnage ou moulage préliminaire ;
un second moyen de chauffage (20) agencé dans le chemin de traitement (5) en aval de la station de formage préliminaire (18) pour chauffer le matériau de préforme alimenté le long du chemin de traitement (5) ; et
un moyen de formage (22) agencé dans le chemin de traitement (5) en aval du second moyen de chauffage (20) et configuré pour façonner ou mouler un profilé en coupe transversal de la ou des plusieurs couches (wn) de matériau de préforme lorsque la ou les plusieurs couches (wn) sont alimentées le long du chemin de traitement (5) ;
dans lequel le moyen de formage (22) est configuré pour façonner ou mouler le profilé en coupe transversal de la ou des plusieurs couches (wn) transversalement à la direction longitudinale ;
dans lequel le moyen de formage (22) comporte une pluralité de stations de formage (25) agencées en série le long du chemin de traitement (5) pour façonner ou mouler progressivement le profilé en coupe transversal du matériau de préforme lorsque la ou les plusieurs couches (wn) sont alimentées le long du chemin de traitement (5) ; et
dans lequel le moyen de formage (22) comporte un cadre rotatif (23) présentant au moins un moyen de façonnage ou moule (24) sur sa circonférence dans ou sur lequel le profilé en coupe transversal du matériau de préforme est façonné ou moulé.

2. Système (1) selon la revendication 1, dans lequel le cadre rotatif (23) est configuré pour tourner à une vitesse à laquelle la vitesse tangentielle du moyen de façonnage ou moule (24) sur sa circonférence est sensiblement identique à une vitesse de la ou des plusieurs couches (wn) de matériau de préforme alimenté par le moyen d'alimentation (6).

3. Système (1) selon la revendication 1 ou la revendication 2, dans lequel le cadre rotatif (23) comprend une pluralité de moyens de façonnage ou moules (24) agencés autour de sa circonférence, et dans lequel la pluralité de moyens de façonnage ou moules (24) sont détachables du cadre rotatif (23) de manière séparée.

4. Système (1) selon une quelconque des revendications 1 à 3, dans lequel l'approvisionnement en matériau (2) comprend au moins une bobine ou un dévidoir (3) de matériau fibreux ; et/ou dans lequel le moyen d'alimentation (6) comprend au moins une paire de rouleaux d'entraînement (7) destinés à tirer la ou les plusieurs couches (wn) de matériau de préforme depuis l'approvisionnement en matériau (2) et à les alimenter ou les transporter le long du chemin de traitement (5).

5. Système (1) selon une quelconque des revendications 1 à 4, dans lequel le moyen de dépose (9) comprend une tête de transport (10) destinée à saisir, transporter et déposer ou insérer la section discrète ou non-continue sur ou entre la ou les plusieurs couches (wn).

6. Système (1) selon une quelconque des revendications 1 à 5, comprenant en outre un moyen de consolidation (12) destiné à consolider ou presser ensemble la ou les plusieurs couches (wn) de matériau de préforme alimenté le long du chemin de traitement (5).

7. Procédé destiné à produire une préforme composite avec un système selon une quelconque des revendications 1 à 6, en particulier à préformer en continu un matériau de renfort pour un élément composite, comprenant les étapes consistant à :
alimenter une ou plusieurs couches (wn) de matériau de préforme depuis un approvisionnement en matériau (2) le long d'un chemin de traitement (5) ;
chauffer la ou les plusieurs couches (wn) du matériau de préforme alimenté le long du chemin de traitement (5) pour activer ou ramollir une résine ou un liant dans la ou les plusieurs couches ; et
façonner ou mouler un profilé en coupe transversal de la ou des plusieurs couches de matériau de préforme lorsque la ou les plusieurs couches (wn) sont alimentées le long du chemin de traitement (5).
